# EUROPÄISCHE PATENTSCHRIFT

(11) **EP 2 171 231 B1**
(45) Veröffentlichungstag und Bekanntmachung des Hinweises auf die Patenterteilung: **12.01.2011**
(21) Anmeldenummer: 08735017.9
(22) Anmeldetag: 04.04.2008
(51) Int. Cl.: F01N 3/20, F01N 3/28, F01N 13/08, F01N 13/18

(54) **VORRICHTUNG ZUR REINIGUNG VON ABGASEN EINER BRENNKRAFTMASCHINE**
DEVICE FOR THE PURIFICATION OF EXHAUST GASES OF AN INTERNAL COMBUSTION ENGINE
DISPOSITIF DE PURIFICATION DES GAZ D'ÉCHAPPEMENT D'UN MOTEUR À COMBUSTION INTERNE

(30) Priorität: 29.06.2007 DE 102007030442
(43) Veröffentlichungstag der Anmeldung: 07.04.2010
(73) Patentinhaber: Audi AG, 85045 Ingolstadt (DE)
(72) Erfinder: KOPP, Andre, 74172 Neckarsulm (DE); SCHIMIK, Viktor, 74235 Erlenbach (DE); VAN DE BURGT, Maarten, 74078 Heilbronn (DE)
(74) Vertreter: Krah, Annette
(86) Internationale Anmeldenummer: PCT/EP2008/002685
(87) Internationale Veröffentlichungsnummer: WO 2009/003544

(56) Entgegenhaltungen:
- EP-A- 1 602 403
- WO-A-02/32552
- WO-A-02/075124
- WO-A-2004/022933
- WO-A-2004/061278
- WO-A-2007/145372
- GB-A- 1 444 362

## Beschreibung

Die Erfindung betrifft eine Vorrichtung zur Reinigung von Abgasen für einen Abgasstrang einer Brennkraftmaschine nach dem Oberbegriff des Anspruchs 1.

Aus der gattungsbildenden DE 103 00 298 A1 ist bereits eine Vorrichtung zur Reinigung von Abgasen für einen Abgasstrang einer Brennkraftmaschine bekannt, die einen zweiflutigen Abgasstrang aufweist, wobei jeder Strangabschnitt jeweils einen NOx-Speicherkatalysator, einen NO₂-Bildungskatalysator, einen SCR-Katalysator und eine Zudosiereinrichtung zur Zudosierung eines Reduktionsmittels aufweist. Mit einem derartigen Aufbau soll sichergestellt werden, dass der SCR-Katalysator mit eingespeichertem Ammoniak noch im Abgasstrom abwärts des NOx-Speicherkatalysators enthaltene Stickoxide reduzieren kann, wobei gleichzeitig Ammoniak oxidiert wird. Jedem der Katalysatoren ist dabei in jedem der Teilabgasstränge ein separater Sensor zugeordnet. Ein derartiger in der Fig. 5 der DE 103 00 298 A1 dargestellter Aufbau ist sowohl bauteiltechnisch als auch steuerungstechnisch sehr aufwendig und damit teuer in der Herstellung.

In der nicht vor veröffentlichten WO 2007/145372 A1 führt das Abgas das Reduktionsmittel aus dem Teilkanal mit, indem es die Teilkanäle durchströmt.

Ein ähnlicher Aufbau ist auch aus der EP 1 055 806 A2 bekannt, bei der flüssiges Reduktionsmittel aus einem Vorratsbehälter über jedem Teilabgasstrang eines zweiflutigen Abgasstrangs zugeordnete Zudosierventile gesteuert zugeführt wird. Ein hierzu im Wesentlichen identischer Aufbau ist auch aus der DE 199 57 539 A1 (Fig. 3) bekannt. Diese Aufbauten weisen somit ebenfalls die zuvor genannten Nachteile auf.

WO 02/075 124 A1 offenbart ein Dosiersystem mit einem Zudosierkanal, auf dessen Austrittsöffnung zwei Teilabgasströme gerichtet sind, die mittels Kanalöffnungen definiert werden und die entsprechende Menge Reduktionsmittel indem jeweiligen Abgasstrang mitreißen.

EP 0 688 941 A1 sowie DE 4340 613 A1 offenbaren parallele Teilstränge, deren Katalysatoren von einem gemeinsamen Brenner beheizt werden kömmen. Demgegenüber ist es Aufgabe der vorliegenden Erfindung, eine Vorrichtung zur Reinigung von Abgasen für einen Abgasstrang einer Brennkraftmaschine zur Verfügung zu stellen, mittels der eine Abgasreinigung in baulich einfacher Weise mit hoher Funktionssicherheit durchgeführt werden kann.

Diese Aufgabe wird gelöst mit den Merkmalen des Anspruchs 1.

Gemäß Anspruch 1 ist vorgesehen, dass jedem der Teilabgasstränge wenigstens ein von einem Zudosierbereich einer einzigen Zudosiereinrichtung abzweigender Zudosierkanal zugeordnet ist, sodass in jeden der Teilabgasstränge je ein von einem Zudosierbereich einer einzigen Zudosiereinrichtung abzweigender Zudosierkanal mündet, über die jedem Teilabgasstrang ein vorgegebener Anteil der zudosierten Reduktionsmittelmenge zugeführt wird.

Mit einem derartigen Aufbau kann lediglich mit einer einzigen Zudosiereinrichtung eine funktionssicher zu bewerkstelligende Zudosierung von Reduktionsmittel in die mehreren Teilabgasstränge erfolgen, so dass nicht für jeden Teilabgasstrang eine separate Zudosiereinrichtung erforderlich ist. Damit lässt sich der Bauteilaufwand und gleichzeitig auch der zur Steuerung der einzelnen Zudosiereinrichtungen erforderliche Steuerungsaufwand deutlich reduzieren.

Grundsätzlich können die einzelnen Teilabgasstränge unterschiedlich ausgelegt und ausgebildet sein, so dass sich in den einzelnen Teilabgassträngen unterschiedliche Strömungsverhältnisse einstellen. In diesem Fall ist dann durch eine entsprechende Ansteuerung und Auslegung der Zudosiereinrichtung sowie der Zudosierkanäle sicherzustellen, dass eine geeignete und an die jeweiligen Strömungsverhältnisse im Teilabgasstrang angepasste Reduktionsmittelmenge zudosiert wird. Gemäß einer besonders bevorzugten Ausgestaltung der Erfindung ist jedoch vorgesehen, dass die einzelnen Teilabgasstränge bevorzugt von der Brennkraftmaschine bzw. von einer Abzweigstelle der einzelnen Teilabgasstränge ausgehend wenigstens bis einschließlich des Katalysatorbereiches identisch ausgelegt und ausgestattet und damit im übertragenen Sinne identisch in der Art von Gleichteilen ausgebildet sind. Mit einer derartig identischen bzw. symmetrischen Auslegung der Abgasstränge werden auf einfache Weise im Wesentlichen identische Strömungsverhältnisse in den einzelnen Abgassträngen erhalten, so dass in jedem Abgasstrang eine im Wesentlichen identische Reduktionsleistung erzielt wird. Insbesondere in Verbindung mit derartigen identisch ausgebildeten Abgassträngen ergibt sich ein weiterer besonderer Vorteil: So braucht hier lediglich in einem der Teilabgasstränge eine entsprechende Sensorik, insbesondere ein NOx-Sensor, vorgesehen sein, da die über die in diesem Abgasstrang angeordnete Sensorik bzw. Sensoreinrichtungen Ergebnisse erfasst werden, die im Wesentlichen identisch und damit vergleichbar mit den Verhältnissen in den anderen Teilabgassträngen sind.

In Verbindung mit der identischen Ausbildung von Teilabgassträngen ist es besonders vorteilhaft, dass jedem der Teilabgasstränge auch eine im Wesentlichen identische Reduktionsmittelmenge zu identischen Zeiten für identische Zeiträume zugeführt wird. Dementsprechend sind auch die von der einzigen Zudosiereinrichtung abzweigenden Zuführkanäle entsprechend den Teilabgassträngen identisch im Sinne von Gleichteilen bzw. im Sinne einer symmetrischen Ausführung auszubilden, so dass in den Zudosierkanälen ebenfalls jeweils identische Strömungsverhältnisse vorliegen. Dies ist insbesondere erforderlich, falls eine Sensorik lediglich für einen von mehreren Teilabgassträngen vorgesehen ist.

Um sicherzustellen, dass auch eine vorgegebene, bevorzugt jeweils gleiche Menge an Reduktionsmittel über die Zudosierkanäle in die jeweils zugeordneten Teilabgasstränge zugeführt wird, können im Bereich der Einmündung der einzigen Zudosiereinrichtung in einen Knotenbereich bzw. Zwickelbereich eines Zudosierbereiches, von dem die einzelnen Zudosierkanäle abzweigen, auch zusätzliche Hilfsmittel angeordnet sein, die die Aufteilung der zudosierten Reduktionsmittelmenge in die einzelnen Teilströme bewerkstelligt bzw. unterstützt. Beispielsweise können dies klappenförmige Trennelemente oder Leitbleche oder dergleichen andere Trennmittel sein. Beispielsweise ist der mittels der Zudosiereinrichtung zudosierte flüssige Reduktionsmittelstrahl so auf einen als Trennelement, bevorzugt als Zwickelkante ausgebildeten Bereich des Zwickel- bzw. Knotenbereiches gerichtet, das der Reduktionsmittelstrom in eine der Anzahl der Teilabgasstränge entsprechende Anzahl von Teilströmen aufgeteilt wird. Besonders bevorzugt ist in einem solchen Fall dann die Zudosiereinrichtung genau gegenüberliegend zum Trennelement bzw. zur Zwickelkante angeordnet. Ggf. kann in Verbindung mit dieser Ausgestaltung auch vorgesehen sein, dass der Reduktionsmittelstrahl hinsichtlich des Anstrahlwinkels des Trennelementes variabel einstellbar ausgebildet ist, so dass unterschiedliche Mengen von Teilströmen in den einzelnen Teilabgassträngen erzielt werden können.

Die einzelnen, bevorzugt zwei Zudosierkanäle sind dabei bevorzugt Bestandteile einer einzigen Rohranordnung.

Besonders bevorzugt sind nach einer konkreten Ausgestaltung zwei identische Teilabgasstränge vorgesehen, die eine zweiflutige Abgasanlage ausbilden. Diese zwei Teilabgasstränge weisen bevorzugt eine gleiche Höhenlage auf und liegen in derselben, durch die Fahrzeuglängsachse und die Fahrzeugquerachse aufgespannten Fahrzeug-Horizontalebene. Dadurch lassen sich auf einfache Weise die gleichen Strömungsverhältnisse in den einzelnen Teilabgassträngen ausbilden. In Verbindung mit einer derartigen Ausgestaltung ist es zudem besonders vorteilhaft, dass auch die einzige Zudosiereinrichtung in der Mitte zwischen den beiden Teilabgassträngen angeordnet ist, bevorzugt ebenfalls in der Fahrzeug-Horizontalebene.

Das Reduktionsmittel liegt vorzugsweise in flüssiger Form vor, z. B. als wässrige Harnstofflösung oder in Form von Ammoniak. Grundsätzlich wäre jedoch auch eine Zudosierung des Reduktionsmittels in fein zerstäubter bzw. gasförmiger Art möglich.

Die Katalysatoranordnung selbst kann durch einen in jedem Teilabgasstrang angeordneten Katalysator gebildet sein, der insbesondere ein SCR-Katalysator ist, mit dem im Rahmen der sogenannten selektiven katalytischen Reduktion (SCR) eine NOx-Umwandlung in magerer Atmosphäre erfolgt. Grundsätzlich bestünde jedoch auch die Möglichkeit, die einzelnen Teilabgasstränge zu einem einflutigen Abgasstrang zusammenzuführen und dann den Katalysator, insbesondere SCR-Katalysator im einflutigen Bereich vorzusehen. Dies kann z. B. dann der Fall sein, wenn die Brennkraftmaschine durch einen V-Motor gebildet ist, von der zwei Abgasstränge abzweigen. Auch hier wäre somit in Verbindung mit der erfindungsgemäßen Ausbildung und dem Vorsehen von ausgehend von einer einzigen Zudosiereinrichtung abzweigenden Zudosierkanälen eine vorteilhafte Schadstoffreduzierung, insbesondere Stickoxidreduzierung möglich.

Gemäß einer besonders bevorzugten konkreten Ausgestaltung ist die einzige Zudosiereinrichtung durch ein Zudosierventil gebildet, mittels dem das zuzudosierende Reduktionsmittel eingespritzt bzw. eingesprüht wird. Ein derartiges Zudosierventil ist in üblicher Weise mit einer Steuereinrichtung, insbesondere einem Motorsteuergerät, gekoppelt und damit gut im Rahmen des ohnehin vorzusehenden Motormanagements zu steuern.

Um eine besonders effektive Vermischung des zudosierten Reduktionsmittels in den einzelnen Teilabgassträngen zu erzielen, kann zudem noch vorgesehen sein, dass in jedem Teilabgasstrom wenigstens eine Mischeinrichtung angeordnet ist, die insbesondere als statischer Mischer ausgebildet ist, mittels der eine effektive und gleichmäßige Vermischung von Reduktionsmittel und Teilabgasstrom erfolgen kann.

Die Erfindung wird nachfolgend anhand einer Zeichnung näher erläutert.

Die einzige Figur zeigt schematisch eine Brennkraftmaschine 1, die als V-Motor ausgebildet ist. Von jeder Zylinderbank 2, 3 zweigt ein Teilabgasstrang 4, 5 ab, so dass hierdurch ein zweiflutiger Abgasstrang 6 ausgebildet wird.

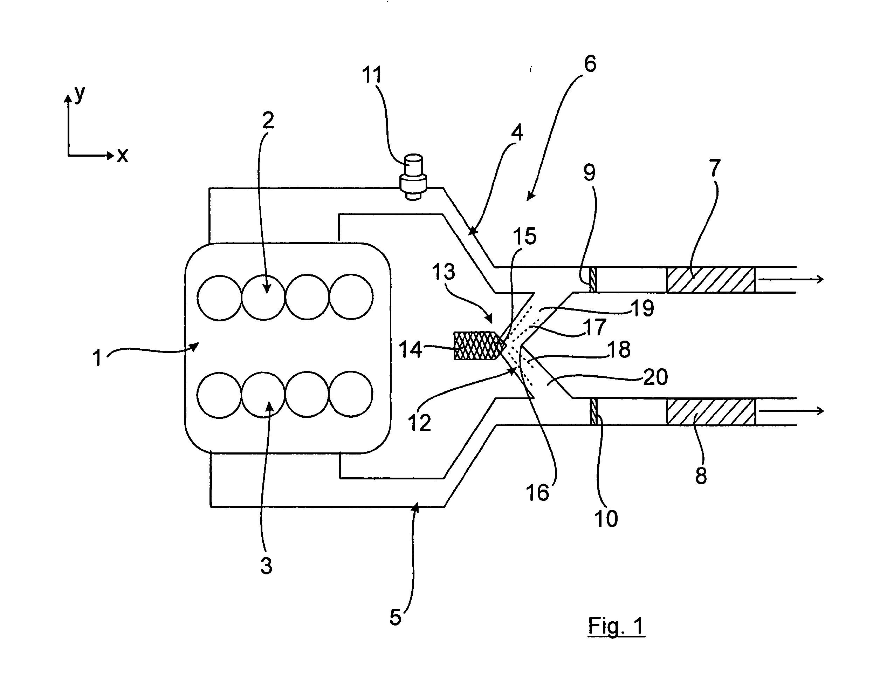

Wie dies der schematischen Darstellung der Fig. 1 sehr gut entnommen werden kann, sind die beiden Teilabgasstränge 4, 5 identisch ausgelegt und ausgebildet, und zwar hinsichtlich Formgebung, Krümmung, Querschnitt und Funktionsteilen, d. h., dass in jedem der Teilabgasstränge 4, 5 an identischer Stelle im Strömungsverlauf der Teilabgasstränge 4, 5 ein identisch ausgebildeter SCR-Katalysator 7, 8 angeordnet ist, dem ebenfalls wiederum in identischer Weise jeweils ein identischer statischer Mischer 9, 10 in jedem Teilabgasstrang 4, 5 vorgeschaltet ist.

Die beiden Teilabgasstränge 4, 5 liegen bevorzugt in einer durch die Fahrzeuglängsachsenrichtung x und die Fahrzeugquerachsenrichtung y aufgespannten Fahrzeug-Horizontalebene.

Wie dies der Fig. 1 weiter entnommen werden kann, ist zwischen den beiden Teilabgassträngen 4, 5, bevorzugt ebenfalls in der Fahrzeug-Horizontalebene liegend, ein sogenanntes Verbindungs- bzw. Übersprecherrohr 12 vorgesehen, das V-förmig ausgebildet ist und einen Zwickelbereich 13 aufweist, von dem identisch ausgebildete Zudosierkanäle 19, 20 als V-Schenkel in die Teilabgasstränge 4, 5 münden. Der Zwickelbereich 13 liegt dabei bevorzugt exakt mittig zwischen den beiden Teilabgassträngen 4, 5 und nimmt ein Zudosierventil 14 auf, dessen Ventildüse 15 auf eine gegenüberliegende Zwickelkante gerichtet ist, so dass eine mittels des Zudosierventils 14 zudosierte flüssige Reduktionsmittelmenge genau auf die Zwickelkante 16 auftrifft und den Reduktionsmittelstrom bevorzugt in zwei im Wesentlichen identische Reduktionsmittel-Teilströme 17, 18 aufteilt. Diese Teilströme 17, 18 strömen über die vom Zwickelbereich 13 abzweigenden Zudosierkanäle 19, 20 in die jeweils zugeordneten Teilabgasstränge 4, 5 ein, um sich dort mit dem jeweiligen Abgas-Teilstrom der Zylinderbänke 2, 3 zu vermischen, bevor dieses Gemisch anschließend zur selektiven katalytischen Reduktion als Reduktionsmittel/Abgas-Gemisch in den jeweiligen SCR-Katalysator 7, 8 einströmt und diesen durchströmt.

Der einzige Unterschied zwischen den beiden ansonsten identisch ausgelegten, bestückten und ausgebildeten Teilabgassträngen 4, 5 besteht darin, dass lediglich in einem der Teilabgasstränge 4, 5 - hier beispielhaft im Teilabgasstrang 4 - ein NOx-Sensor 11 vorgesehen ist, mittels dem eine Sensierung der Stickoxid-Konzentration im Abgas erfolgt. Aufgrund der identischen bzw. symmetrischen Ausbildung der Teilabgasstränge 4, 5 ergeben sich nämlich in diesen identische Strömungsverhältnisse und Strömungsbedingungen sowie Strömungszusammensetzungen, so dass es für die Sensierung der Stickoxid-Konzentration im Abgas sowie für die Überprüfung der abgasrelevanten Bauteile für die Eigendiagnose hinreichend ist, lediglich einen der beiden Teilabgasströme zu betrachten und zu sensieren.

Als Reduktionsmittel wird hier beispielhaft eine wässrige Harnstofflösung zudosiert.

## Patentansprüche

1. Vorrichtung zur Reinigung von Abgasen für einen Abgasstrang einer Brennkraftmaschine mit einem Abgaskanal, der in einem vorgegebenen Bereich mehrflutig ausgebildet ist und mehrere Teilabgasstränge aufweist, und mit einer Zudosiereinrichtung, mittels der dem Abgaskanal im Bereich vor einer Katalysatoranordnung eine vorgegebene Menge eines Reduktionsmittels zu vorgegebenen Zeiten zudosierbar ist, **dadurch gekennzeichnet, dass** in jeden der Teilabgasstränge (4, 5) ein von einem Zudosierbereich (13) einer einzigen Zudosiereinrichtung (14) abzweigender Zudosierkanal (19, 20) mündet, so dass im Regenerationsbetrieb jedem Teilabgasstrang (4, 5) über die Zudosierkanäle (19, 20) ein vorgegebener Anteil der zudosierten Reduktionsmittelmenge mittels der einzigen Zudosiereinrichtung (13) zugeführt wird.

2. Vorrichtung nach Anspruch 1, **dadurch gekennzeichnet, dass** die einzelnen Teilabgasstränge (4, 5), von der Brennkraftmaschine (1) oder von einer Abzweigstelle ausgehend wenigstens bis einschließlich des Katalysatorbereiches, und/oder die Zudosierkanäle (19, 20) im Wesentlichen identisch ausgelegt, ausgestattet und ausgebildet sind.

3. Vorrichtung nach Anspruch 2, **dadurch gekennzeichnet, dass** zwei Teilabgasstränge (4, 5) vorgesehen sind, die im montierten Zustand eine gleiche Höhenlage aufweisen und in einer durch die Fahrzeuglängsachse und die Fahrzeugquerachse aufgespannten Fahrzeug-Horizontalebene liegen,
dass die einzige Zudosiereinrichtung (14) in der Mitte zwischen den beiden Teilabgassträngen (4, 5), bevorzugt ebenfalls in der Fahrzeug-Horizontalebene, angeordnet ist, und
dass von der mittigen Zudosiereinrichtung (14) jeweils identisch ausgebildete Zudosierkanäle (19, 20) abzweigen und in den jeweils zugeordneten Teilabgasstrang (4, 5) münden.

4. Vorrichtung nach einem der Ansprüche 1 bis 3, **dadurch gekennzeichnet, dass** lediglich ein einziger Stickoxidsensor (11) vorgesehen ist, der einem der Teilabgasstränge (4) zugeordnet ist.

5. Vorrichtung nach einem der Ansprüche 1 bis 4, **dadurch gekennzeichnet, dass** die einzige Zudosiereinrichtung (14) in den als Knotenbereich oder als Zwickelbereich ausgebildeten Zudosierbereich (13) eines die Zudosierkanäle (19, 20) ausbildenden oder aufweisenden Verbindungsrohres (12) einragt, von dem die Zudosierkanäle (19, 20) zu den jeweils zugeordneten Teilabgassträngen (4, 5) abzweigen.

6. Vorrichtung nach einem der Ansprüche 1 bis 5, **dadurch gekennzeichnet, dass** Mittel (16) vorgesehen sind, die als Trennelement eine Aufteilung der zudosierten Reduktionsmittelmenge auf die einzelnen Teilabgasstränge (4, 5) bewirken.

7. Vorrichtung nach Anspruch 5 und 6, **dadurch gekennzeichnet, dass** der mittels der Zudosiereinrichtung (14) zudosierte flüssige Reduktionsmittelstrahl so auf ein Trennelement (16), bevorzugt eine Zwickelkante des Zwickelbereichs (13) gerichtet ist, dass der Reduktionsmittelstrom in eine der Anzahl der Teilabgasstränge (4, 5) entsprechende Anzahl von Teilströmen (17, 18) aufteilbar ist.

8. Vorrichtung nach einem der Ansprüche 1 bis 7, **dadurch gekennzeichnet, dass** die Katalysatoranordnung durch einen in jedem Teilabgasstrang (4, 5) angeordneten Katalysator (7, 8), insbesondere durch einen SCR-Katalysator dargestellt ist.

9. Vorrichtung nach einem der Ansprüche 1 bis 8, **dadurch gekennzeichnet, dass** die Zudosiereinrichtung (14) durch ein Zudosierventil gebildet ist, das mit einer Steuereinrichtung gekoppelt ist.

10. Vorrichtung nach einem der Ansprüche 1 bis 9, **dadurch gekennzeichnet, dass** das Reduktionsmittel eine flüssige, wässrige Harnstofflösung oder Ammoniak ist.

11. Vorrichtung nach einem der Ansprüche 1 bis 10, **dadurch gekennzeichnet, dass** in jedem Teilabgasstrang (4, 5) eine Mischeinrichtung (9, 10), insbesondere ein statischer Mischer, zur Vermischung von Reduktionsmittel und Teilabgasstrom angeordnet ist.

12. Vorrichtung nach einem der Ansprüche 1 bis 11, **dadurch gekennzeichnet, dass** die Brennkraftmaschine (1) als V-Motor ausgebildet ist, insbesondere als V8-, V10- oder V12-Motor.

## Claims

1. Device for the purification of exhaust gases for an exhaust tract of an internal combustion engine having an exhaust-gas duct which is of multichannel design in a predefined region and has a plurality of partial exhaust tracts, and having a dosing device by means of which a predefined quantity of a reducing agent can be dosed at predefined times into the exhaust-gas duct in the region upstream of a catalytic converter arrangement, **characterized in that** a dosing duct (19, 20) which branches off from a dosing region (13) of a single dosing device (14) opens out in each of the partial exhaust tracts (4, 5), such that in the regeneration mode, each partial exhaust tract (4, 5) is supplied a predefined proportion of the dosed reducing agent quantity by means of the single dosing device (13).

2. Device according to Claim 1, **characterized in that** the individual partial exhaust tracts (4, 5), proceeding from the internal combustion engine (1) or from a branching point at least as far as and including the catalytic converter region, and/or the dosing ducts (19, 20) are configured, equipped and designed in substantially the same way.

3. Device according to Claim 2, **characterized in that** two partial exhaust sections (4, 5) are provided which, in the mounted state, are situated at the same height and lie in a vehicle horizontal plane spanned by the vehicle longitudinal axis and the vehicle transverse axis,
**in that** the single dosing device (14) is arranged centrally between the two partial exhaust tracts (4, 5), preferably likewise in the vehicle horizontal plane, and
**in that** in each case identically designed dosing ducts (19, 20) branch off from the central dosing device (14) and open out into the respectively associated partial exhaust tract (4, 5).

4. Device according to one of Claims 1 to 3, **characterized in that** only a single nitrogen oxide sensor (11) is provided which is assigned to one of the partial exhaust tracts (4).

5. Device according to one of Claims 1 to 4, **characterized in that** the single dosing device (14) projects into the dosing region (13), which is designed as a node region or as a crotch region, of a connecting pipe (12) which forms or has the dosing ducts (19, 20), from which dosing region (13) the dosing ducts (19, 20) branch off to the respectively associated partial exhaust tracts (4, 5).

6. Device according to one of Claims 1 to 5, **characterized in that** means (16) are provided which, as a separating element, cause the dosed reducing agent quantity to be divided between the individual exhaust tracts (4, 5).

7. Device according to Claim 5 and 6, **characterized in that** the liquid reducing agent jet dosed by means of the dosing device (14) is directed towards a separating element (16), preferably a crotch edge of the crotch region (13), in such a way that the reducing agent flow can be divided into a number of partial flows (17, 18) corresponding to the number of partial exhaust tracts (4, 5).

8. Device according to one of Claims 1 to 7, **characterized in that** the catalytic converter arrangement is formed by a catalytic converter (7, 8), in particular an SCR catalytic converter, arranged in each partial exhaust tract (4, 5).

9. Device according to one of Claims 1 to 8, **characterized in that** the dosing device (14) is formed by a dosing valve which is coupled to a control device.

10. Device according to one of Claims 1 to 9, **characterized in that** the reducing agent is a liquid aqueous urea solution or ammonia.

11. Device according to one of Claims 1 to 10, **characterized in that** a mixing device (9, 10), in particular a static mixer, is arranged in each partial exhaust tract (4, 5) for mixing reducing agent and partial exhaust-gas flow.

12. Device according to one of Claims 1 to 11, **characterized in that** the internal combustion engine (1) is designed as a V-configuration engine, in particular as a V8, V10 or V12 engine.

## Revendications

1. Dispositif de purification des gaz d'échappement pour une ligne de gaz d'échappement d'un moteur à combustion interne comprenant une conduite de gaz d'échappement qui est réalisée avec plusieurs canaux dans une région prédéfinie et qui présente plusieurs lignes partielles de gaz d'échappement, et comprenant un dispositif de dosage, au moyen duquel une quantité prédéterminée d'un réducteur peut être ajoutée à intervalles prédéfinis à la conduite de gaz d'échappement dans la région précédant un agencement de catalyseur, **caractérisé en ce que**, dans chacune des lignes partielles de gaz d'échappement (4, 5) débouche une conduite de dosage (19, 20) partant d'une région de dosage (13) d'un dispositif de dosage unique (14), de sorte que, en mode de régénération, une proportion prédéterminée de la quantité de réducteur ajoutée soit acheminée au moyen du dispositif de dosage unique (13) à chaque ligne partielle de gaz d'échappement (4, 5) par le biais des conduites de dosage (19, 20).

2. Dispositif selon la revendication 1, **caractérisé en ce que** les lignes partielles de gaz d'échappement individuelles (4, 5) allant du moteur à combustion interne (1) ou d'un point de raccordement au moins jusqu'à la région de catalyseur incluse, et/ou les conduites de dosage (19, 20) sont conçues, configurées et réalisées essentiellement de manière identique.

3. Dispositif selon la revendication 2, **caractérisé en ce que** deux lignes partielles de gaz d'échappement (4, 5) sont prévues, lesquelles dans l'état monté, présentent une position identique en hauteur et se situent dans un plan horizontal du véhicule formé par l'axe longitudinal du véhicule et l'axe transversal du véhicule,
**en ce que** le dispositif de dosage unique (14) est disposé au milieu entre les deux lignes partielles de gaz d'échappement (4, 5), de préférence également dans le plan horizontal du véhicule, et **en ce que** des conduites de dosage (19, 20) réalisées à chaque fois de manière identique, partent du dispositif de dosage central (14) et débouchent dans la ligne partielle de gaz d'échappement respectivement associée (4, 5).

4. Dispositif selon l'une quelconque des revendications 1 à 3, **caractérisé en ce que** l'on ne prévoit qu'un seul capteur d'oxydes d'azote (11), qui est associé à l'une des lignes partielles de gaz d'échappement (4).

5. Dispositif selon l'une quelconque des revendications 1 à 4, **caractérisé en ce que** la dispositif de dosage unique (14) pénètre dans la région de dosage (13) d'un tube de connexion (12) constituant ou présentant les conduites de dosage (19, 20), laquelle région de dosage est réalisée en tant que région de noeud ou en tant que région de coin, les conduites de dosage (19, 20) partant de ce tube de connexion (12) et allant jusqu'aux lignes partielles de gaz d'échappement respectives associées (4, 5).

6. Dispositif selon l'une quelconque des revendications 1 à 5, **caractérisé en ce que** des moyens (16) sont prévus, lesquels provoquent en tant qu'élément de séparation, une division de la quantité de réducteur ajoutée dans les lignes partielles de gaz d'échappement individuelles (4, 5).

7. Dispositif selon les revendications 5 et 6, **caractérisé en ce que** le jet de réducteur fluide ajouté au moyen du dispositif de dosage (14) est orienté vers un élément de séparation (16), de préférence une arête de coin de la région de coin (13), de telle sorte que le flux de réducteur puisse être divisé en un nombre de flux partiels (17, 18) correspondants au nombre des lignes partielles de gaz d'échappement (4, 5).

8. Dispositif selon l'une quelconque des revendications 1 à 7, **caractérisé en ce que** l'agencement de catalyseur est constitué par un catalyseur (7, 8) en particulier par un catalyseur SCR, disposé dans chaque ligne partielle de gaz d'échappement (4, 5).

9. Dispositif selon l'une quelconque des revendications 1 à 8, **caractérisé en ce que** le dispositif de dosage (14) est formé par une soupape de dosage qui est accouplée à un dispositif de commande.

10. Dispositif selon l'une quelconque des revendications 1 à 9, **caractérisé en ce que** le réducteur est une solution d'urée liquide aqueuse ou de l'ammoniaque.

11. Dispositif selon l'une quelconque des revendications 1 à 10, **caractérisé en ce que** l'on dispose dans chacune des lignes partielles des gaz d'échappement (4, 5) un dispositif de mélange (9, 10), en particulier un mélangeur statique, pour le mélange du réducteur et du flux partiel, de gaz d'échappement.

12. Dispositif selon l'une quelconque des revendications 1 à 11, **caractérisé en ce que** le moteur à combustion interne (1) est réalisé sous forme de moteur en V, en particulier sous forme de moteur V8, V10 ou V12.
